# EUROPEAN PATENT SPECIFICATION

(11) **EP 3 517 384 B1**
(45) Date of publication and mention of the grant of the patent: **14.12.2022**
(21) Application number: 17852881.6
(22) Date of filing: 12.09.2017
(51) Int. Cl.: B62D 15/02, B60W 40/02, B60W 40/08, B60W 50/08, B60W 50/00, G08G 1/16

(54) **VEHICLE CONTROL DEVICE, VEHICLE CONTROL METHOD, AND MOVING BODY**
FAHRZEUGSTEUERUNGSVORRICHTUNG, FAHRZEUGSTEUERUNGSVERFAHREN UND BEWEGLICHER KÖRPER
DISPOSITIF DE COMMANDE DE VÉHICULE, PROCÉDÉ DE COMMANDE DE VÉHICULE, ET CORPS MOBILE

(30) Priority: 26.09.2016 JP 2016186480
(43) Date of publication of application: 31.07.2019
(73) Proprietor: Sony Group Corporation, Tokyo 108-0075 (JP)
(72) Inventor: KANEKO Asako, Tokyo 108-0075 (JP); MARUKAWA Kazuyuki, Tokyo 108-0075 (JP); SHIMIZU Itaru, Tokyo 108-0075 (JP); HAYAMIZU Shinnosuke, Tokyo 108-0075 (JP); YUKAWA Yasuhiro, Tokyo 108-0075 (JP)
(74) Representative: Witte, Weller & Partner Patentanwälte mbB
(86) International application number: PCT/JP2017/032749
(87) International publication number: WO 2018/056104

(56) References cited:
- EP-A1- 2 769 895
- EP-A1- 3 050 771
- EP-A2- 2 979 914
- JP-A- 2008 201 165
- JP-A- 2013 112 324
- JP-A- 2015 024 746
- JP-A- 2016 034 782
- US-A1- 2015 088 358

## Description

### Technical Field

The present invention relates to a vehicle control apparatus, a vehicle control method, and a movable object, and particularly to a vehicle control apparatus, a vehicle control method, and a movable object that make it possible to realize appropriate switching of an operation mode.

### Background Art

Currently, technological development relating to automatic driving of an automobile is actively performed. An operation mode of an automobile capable of performing automatic driving can be roughly divided into, for example, three modes of manual driving, assisted driving, and automated driving. The assisted driving is an operation mode in which a control system of a vehicle assists driving by a passenger. The automated driving is an operation mode in which a control system of a vehicle completely controls driving without requiring driving by a passenger.

The operation mode can be switched by a driver at an arbitrary timing or automatically by a control system.

As an example of the latter, Patent Literature 1 discloses that automatic driving of a host vehicle is interrupted on the basis of an interruption history of automatic driving control of another vehicle in a route of a host vehicle. In accordance with this invention, for example, the operation mode is switched from automatic driving to manual driving in the section where accidents have frequently occurred in the past.

Meanwhile, Patent Literature 2 discloses that switching from an automatic travelling mode to a manual travelling mode is performed in the case where a predetermined driving operation is performed by a driver when a vehicle is travelling in the automatic travelling mode.

Further, Patent Literature 3 describes that switching from a manual driving mode to an automatic driving mode is performed on an accelerator device and a braking device before a steering device at a junction from a general road to an expressway.

Further, Patent Literature 4 describes that after a driver requests for release of automatic driving, whether or not the driver performs an appropriate driving operation is determined, and automatic driving is released in the case where it is determined that the driver performs an appropriate driving operation.

Document EP 2 769 895 A1 discloses a method for operating a driver assistance system. This system is adapted for deactivating a longitudinal guidance function while maintaining a transverse guidance function.

Document EP 3 050 771 A1 discloses an information provision method for notifying an occupant of a vehicle of information about an automated control of a driving operation. This method includes obtaining information about a property and a state of the occupant.

### Citation List

### Patent Literature

Patent Literature 1: Japanese Patent Application Laid-open No. 2015-153153
Patent Literature 2: Japanese Patent Application Laid-open No. 1998-329575
Patent Literature 3: Japanese Patent Application Laid-open No. 2015-24746
Patent Literature 4: Japanese Patent Application Laid-open No. 2007-196809

### Disclosure of Invention

### Technical Problem

However, switching of operation modes of devices such as an accelerator device, a braking device, and a steering device in a stepwise manner has not been performed. For example, the optimal switching timing of the operation mode of each device differs depending on the state of the driver or surrounding environment.

The present invention has been made in view of the above-mentioned circumstances and it is an object thereof to realizing more appropriate switching of the operation mode.

### Solution to Problem

The object is solved by a control apparatus according to claim 1, a method according to claim 10 and a movable object according to claim 11.

In the present invention, operation modes of a plurality of driving mechanisms are switched at different timings in accordance with an operation mode switching trigger of a vehicle.

### Advantageous Effects of Invention

In accordance with the present invention, it is possible to realize more appropriate switching of an operation mode. It should be noted that the effect described here is not necessarily limitative and may be any effect described in the present disclosure.

### Brief Description of Drawings

[Fig. 1] Fig. 1 is a diagram showing a configuration example of an embodiment of a vehicle to which the present invention is applied.
[Fig. 2] Fig. 2 is a diagram describing blocks to be connected to a bus for CAN communication.
[Fig. 3] Fig. 3 is a block diagram showing a configuration example of a vehicle that realizes an around view monitor function.
[Fig. 4] Fig. 4 is a diagram describing another example of the blocks to be connected to the bus for CAN communication
[Fig. 5] Fig. 5 is a block diagram showing a configuration example of a vehicle control unit according to a first embodiment.
[Fig. 6] Fig. 6 is a flowchart describing operation mode switching processing.
[Fig. 7] Fig. 7 is a block diagram showing a configuration example of a vehicle control unit according to a second embodiment.
[Fig. 8] Fig. 8 is a flowchart describing the operation mode switching processing.
[Fig. 9] Fig. 9 is a flowchart describing the operation mode switching processing.
[Fig. 10] Fig. 10 is a block diagram showing a configuration example of a vehicle control unit according to a third embodiment.
[Fig. 11] Fig. 11 is a flowchart describing the operation mode switching processing.

### Mode(s) for Carrying Out the Invention

Hereinafter, favorable embodiments of the present invention will be described in detail with reference to the drawings. Note that in the specification and drawings, components including substantially the same functional configuration are denoted by the same reference symbols, and overlapping description will be omitted.

Further, description will be made in the following order.
1. Regarding Configuration of Vehicle
2. First Embodiment
3. Second embodiment
4. Third embodiment

### <1. Regarding Configuration of Vehicle>

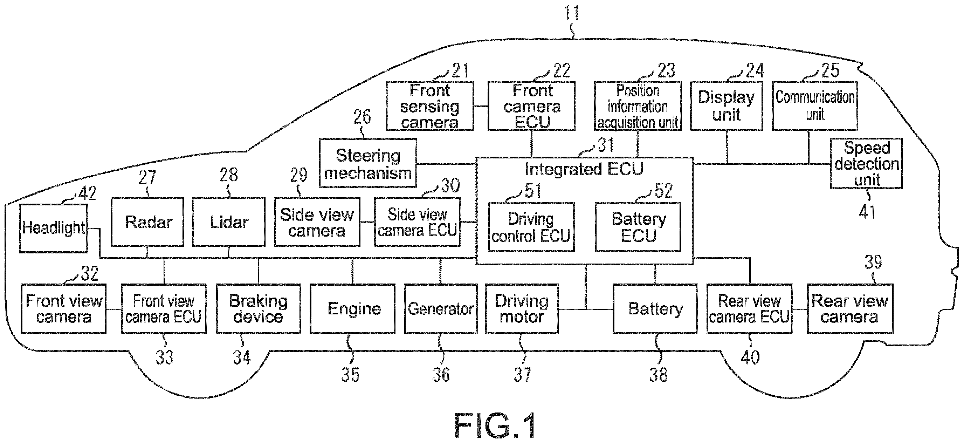

Fig. 1 is a diagram showing a configuration example of an embodiment of a vehicle as a movable object to which the present invention is applied.

A vehicle 11 shown in Fig. 1 includes a front sensing camera 21, a front camera ECU (Electronic Control Unit) 22, a position information acquisition unit 23, a display unit 24, a communication unit 25, a steering mechanism 26,a radar 27, a lidar (Light Detection and Ranging, or Laser Imaging Detection and Ranging: LIDAR) 28, a side view camera 29, a side view camera ECU 30, an integrated ECU 31, a front view camera 32, a front view camera ECU 33, a braking device 34, an engine 35, a generator 36, a driving motor 37, a battery 38, a rear view camera 39, a rear view camera ECU 40, and a vehicle speed detection unit 41, and an in-vehicle sensor 43.

The units provided in the vehicle 11 are connected to each other by a bus for CAN (Controller Area Network) communication, another connection line, and the like. However, in order to make the figure easy to see, the bus, the connection line, and the like are drawn without particularly distinguishing them.

The front sensing camera 21 includes, for example, a camera dedicated to sensing, which is disposed in the interior of the vehicle in the vicinity of a room mirror, images the front of the vehicle 11 as a subject, and outputs the resulting sensing image to the front camera ECU 22.

The front camera ECU 22 appropriately performs processing of improving the image quality or the like on the sensing image supplied from the front sensing camera 21, and then performs image recognition on the sensing image, thereby detecting an arbitrary object such as a white line and a pedestrian from the sensing image. The front camera ECU 22 outputs the result of image recognition to the bus for CAN communication.

The position information acquisition unit 23 includes, for example, a position information measuring system such as a GPS (Global Positioning System) and a quasi-zenith satellite system (QZSS), detects the position of the vehicle 11, and outputs the position information indicating the detection result to the bus for CAN communication.

The display unit 24 includes, for example, a liquid crystal display panel, and is disposed at a predetermined position in the interior of the vehicle such as the center position of an instrument panel and the inside of a room mirror. Further, the display unit 24 may be a transmissive display superimposed and provided on a windshield part, or a display of a car navigation system. The display unit 24 displays various images under the control of the integrated ECU 31.

The communication unit 25 transmits/receives information to/from a peripheral vehicle, a portable terminal device possessed by a pedestrian, a roadside device, or an external server by various kinds of wireless communication such as inter-vehicle communication, vehicle-to-pedestrian communication, and road-to-vehicle communication. For example, the communication unit 25 performs inter-vehicle communication with a peripheral vehicle, receives, from the peripheral vehicle, peripheral vehicle information including information indicating the number of occupants and the travelling state, and supplies it to the integrated ECU 31.

The steering mechanism 26 performs control of the traveling direction of the vehicle 11, i.e., steering angle control, in accordance with the driver's steering wheel operation or the control signal supplied from the integrated ECU 31. The radar 27 is a distance measuring sensor that measures the distance to an object such as a vehicle and a pedestrian in each direction such as forward and backward by using electromagnetic waves such as millimeter waves, and outputs the result of measuring the distance to the object to the integrated ECU 31 or the like. The lidar 28 is a distance measuring sensor that measures the distance to an object such as a vehicle and a pedestrian in each direction such as forward and backward by using light waves, and outputs the result of measuring the distance to the object to the integrated ECU 31 or the like.

The side view camera 29 is, for example, a camera disposed in a casing of a side mirror or in the vicinity of the side mirror, captures an image of the side (hereinafter, referred to also as the side image) of the vehicle 11 including an area to be a blind spot of the driver, and supplies it to the side view camera ECU 30.

The side view camera ECU 30 performs image processing of improving the image quality such as white balance adjustment on the side image supplied from the side view camera 29, and supplies the obtained side image to the integrated ECU 31 via a cable different from the bus for CAN communication.

The integrated ECU 31 includes a plurality of ECUs such as a driving control ECU 51 and a battery ECU 52 arranged at the center of the vehicle 11, and controls the operation of the entire vehicle 11.

For example, the driving control ECU 51 is an ECU realizing an ADAS (Advanced Driving Assistant System) function or an automated driving (Self driving) function, and controls the driving (travelling) of the vehicle 11 on the basis of various kinds of information such as the image recognition result from the front camera ECU 22, the position information from the position information acquisition unit 23, the peripheral vehicle information supplied from the communication unit 25, the measurement results from the radar 27 and the lidar 28, the result of detecting the travelling speed from the vehicle speed detection unit 41, and the like. That is, the driving control ECU 51 controls the steering mechanism 26, the braking device 34, the engine 35, the driving motor 37, and the like to control the driving of the vehicle 11. Further, the driving control ECU 51 controls, on the basis of presence or absence of head light of the oncoming vehicle, or the like, which is supplied from the front camera ECU 22 as the image recognition result, the headlight 42 to control beam application by the headlight 42 such as switching between a high beam and a low beam.

Note that in the integrated ECU 31, a dedicated ECU may be provided for each of the functions including the ADAS function, the automated driving function, and the beam control.

Further, the battery ECU 52 controls power supply or the like by the battery 38.

The front view camera 32 includes, for example, a camera disposed in the vicinity of a front grille, captures an image of the front (hereinafter, referred to also as the front image) of the vehicle 11 including an area to be a blind spot of the driver, and supplies it to the front view camera ECU 33.

The front view camera ECU 33 performs image processing of improving the image quality such as white balance adjustment on the front image supplied from the front view camera 32, and supplies the obtained front image to the integrated ECU 31 via a cable different from the bus for CAN communication.

The braking device 34 operates in accordance with the driver's braking operation or the control signal supplied from the integrated ECU 31, and stops or decelerates the vehicle 11. The engine 35 is a power source of the vehicle 11, and is driven in accordance with the control signal supplied from the integrated ECU 31.

The generator 36 is controlled by the integrated ECU 31, and generates power in accordance with driving of the engine 35. The driving motor 37 is a power source of the vehicle 11, receives power supply from the generator 36 or the battery 38, and is driven in accordance with the control signal supplied from the integrated ECU 31. Note that whether to drive the engine 35 or the driving motor 37 during travelling of the vehicle 11 is appropriately switched by the integrated ECU 31.

The battery 38 includes, for example, a battery of 12 V or a battery of 200 V, and supplies power to the respective units of the vehicle 11 in accordance with the control of the battery ECU 52.

The rear view camera 39 includes, for example, a camera disposed in the vicinity of a license plate of a tailgate, captures an image of the rear side (hereinafter, referred to also as the rear image) of the vehicle 11 including an area to be a blind spot of the driver, and supplies it to the rear view camera ECU 40. For example, the rear view camera 39 is activated when a shift lever (not shown) is moved to the position of the reverse (R).

The rear view camera ECU 40 performs image processing of improving the image quality such as white balance adjustment on the rear image supplied from the rear view camera 39, and supplies the obtained rear image to the integrated ECU 31 via a cable different from the bus for CAN communication.

The vehicle speed detection unit 41 is a sensor that detects the travelling speed of the vehicle 11, and supplies the result of detecting the travelling speed to the integrated ECU 31. Note that in the vehicle speed detection unit 41, from the result of detecting the traveling speed, the acceleration, or the differential of the acceleration may be calculated. For example, the calculated acceleration is used for estimating the time until the collision of the vehicle 11 with an object.

The headlight 42 operates in response to the control signal supplied from the integrated ECU 31, and outputs a beam to illuminate the front of the vehicle 11.

The in-vehicle sensor 43 is a sensor that detects the state and attribute of a passenger in the vehicle 11, and supplies the detection result to the integrated ECU 31. The in-vehicle sensor 43 detects, for example, information regarding the state of the driver, which seat in the vehicle 11 a passenger is sitting, whether the passenger is an adult or a child, and the like. Note that the in-vehicle sensor 43 may include an in-vehicle camera and an in-vehicle camera ECU. In this case, the in-vehicle sensor 43 detects information regarding the state of the driver, which seat in the vehicle 11 a passenger is sitting, whether the passenger is an adult or a child, and the like by performing image recognition on the image captured by the in-vehicle camera.

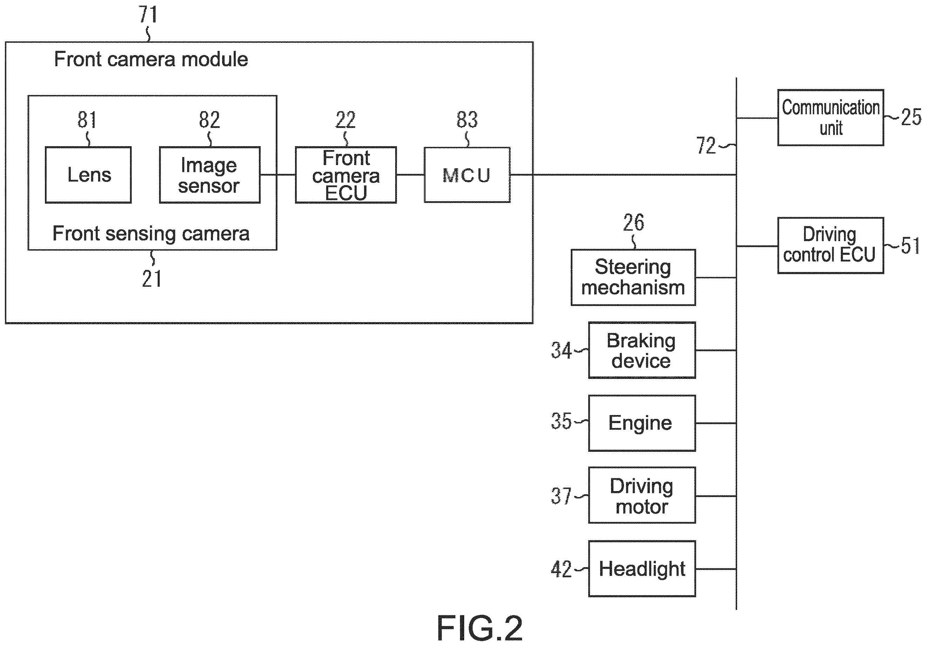

Further, in the vehicle 11, as shown in Fig. 2, a plurality of units including a front camera module 71, the communication unit 25, the driving control ECU 51, the steering mechanism 26, the braking device 34, the engine 35, the driving motor 37, and the headlight 42 are connected to each other via a bus 72 for CAN communication. Note that the components corresponding to those in Fig. 1 are denoted by the same reference symbols in Fig. 2, and description thereof will be appropriately omitted.

In this example, the front camera module 71 includes a lens 81, an image sensor 82, the front camera ECU 22, and an MCU (Module Control Unit) 83.

Further, the lens 81 and the image sensor 82 constitute the front sensing camera 21, and the image sensor 82 includes, for example, a CMOS (Complementary Metal Oxide Semiconductor) image sensor.

In the front camera module 71, light from a subject is collected on the imaging surface of the image sensor 82 by the lens 81. The image sensor 82 captures a sensing image by photoelectrically converting light that has entered from the lens 81, and supplies it to the front camera ECU 22.

The front camera ECU 22 performs, for example, gain adjustment, white balance adjustment, HDR (High Dynamic Range) processing, and the like on the sensing image supplied from the image sensor 82, and then performs image recognition on the sensing image.

In the image recognition, for example, a white line, a curb stone, a pedestrian, a vehicle, a headlight, a brake lamp, a road sign, a time until a collision with the forward vehicle, and the like are recognized (detected). The recognition results of the image recognition are converted into signals in a format for CAN communication by the MCU 83, and output to the bus 72.

Further, information supplied from the bus 72 is converted into a signal in a format defined for the front camera module 71 by the MCU 83, and supplied to the front camera ECU 22.

The driving control ECU 51 appropriately controls the steering mechanism 26, the braking device 34, the engine 35, the driving motor 37, the headlight 42, and the like on the basis of the result of image recognition output from the MCU 83 to the bus 72 and information supplied from other units such as the radar 27 and the lidar 28. Accordingly, driving control such as change of the travelling direction, braking, acceleration, and starting, warning notification control, beam switching control, and the like are realized.

Further, in the case where the driving control ECU 51 realizes the automated driving function or the like, for example, the locus of the position of the target object may be further recognized by the driving control ECU 51 from the image recognition result at each time obtained by the front camera ECU 22, and such a recognition result may be transmitted to an external server via the communication unit 25. In such a case, for example, in the server, learning such as a deep neural network is performed, and a necessary dictionary or the like is generated and transmitted to the vehicle 11. In the vehicle 11, the dictionary or the like obtained in this way is received by the communication unit 25, and the received dictionary or the like is used for various predictions and the like in the driving control ECU 51.

Note that of the controls performed by the driving control ECU 51, control that can be realized from only the result of image recognition on the sensing image may be performed not by the driving control ECU 51 but by the front camera ECU 22.

Specifically, for example, the front camera ECU 22 may control the headlight 42 on the basis of the presence or absence of headlight of the oncoming vehicle, which is obtained by the image recognition on the sensing image. In this case, for example, the front camera ECU 22 generates a control signal that instructs switching between a low beam and a high beam, or the like, and supplies the control signal to the headlight 42 via the MCU 83 and the bus 72, thereby controlling the beam switching by the headlight 42.

Alternatively, for example, the front camera ECU 22 may generate a warning notice of a collision against an object and a warning notice of departure from the travelling lane (lane) on the basis of the result of recognizing a white line, a curb stone, a pedestrian, and the like, which is obtained by the image recognition on the sensing image, and output it to the bus 72 via the MCU 83, thereby controlling the warning notice. In this case, the warning notice output from the front camera ECU 22 is supplied to, for example, the display unit 24 or a speaker (not shown). Accordingly, it is possible to display a warning on the display unit 24 or output a warning message through the speaker.

Further, in the vehicle 11, by displaying a composite image on the display unit 24 at the time of parking, for example, the around view monitor function is realized.

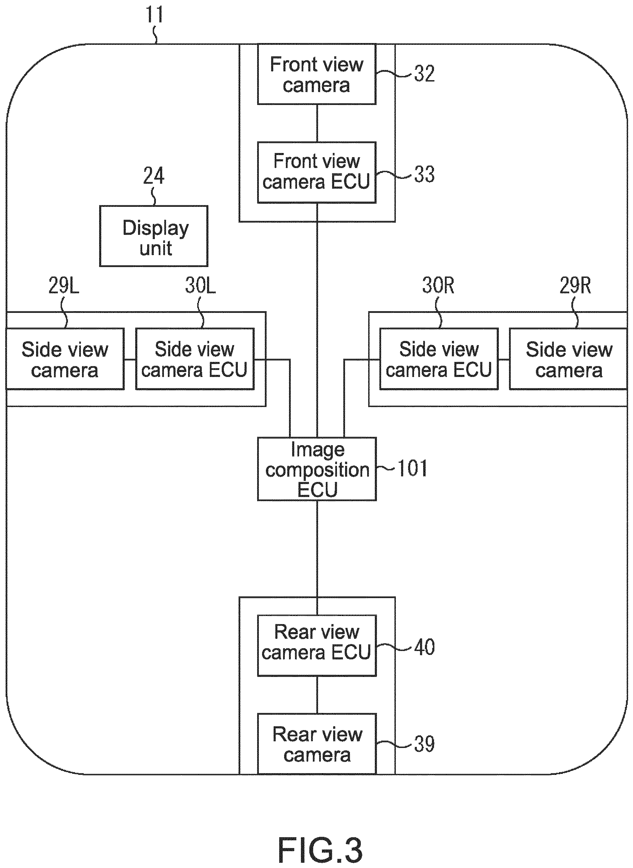

That is, as shown in Fig. 3, the front image, the rear image, and the side image obtained by the respective units are supplied, via a cable different from the bus for CAN communication, to an image composition ECU 101 provided in the integrated ECU 31, and a composite image is generated from the images. Note that the components corresponding to those in Fig. 1 are denoted by the same reference symbols in Fig. 3, and description thereof will be appropriately omitted.

In Fig. 3, as the side view camera 29 shown in Fig. 1, a side view camera 29L disposed on the left side of the vehicle 11 and a side view camera 29R disposed on the right side of the vehicle 11 are provided. Further, as the side view camera ECU 30, a side view camera ECU 30L disposed on the left side of the vehicle 11 and a side view camera ECU 30R disposed on the right side of the vehicle 11 are provided.

To the image composition ECU 101,the front image obtained by the front view camera 32 is supplied from the front view camera ECU 33 and the rear image obtained by the rear view camera 39 is supplied from the rear view camera ECU 40. Further, to the image composition ECU 101, the side image obtained by the side view camera 29L (hereinafter, particularly referred to also as the left side image) is supplied from the side view camera ECU 30L and the side image obtained by the side view camera 29R (hereinafter, particularly referred to also as the right side image) is supplied from the side view camera ECU 30R.

The image composition ECU 101 generates, on the basis of the supplied images, a composite image in which the front image, the rear image, the left side image, and the right side image are arranged in corresponding areas, and supplies the obtained composite image to the display unit 24 for display. The driver is capable of safely and easily parking the vehicle 11 by driving the vehicle 11 while watching the composite image displayed in this way. Note that the integrated ECU 31 may control the driving of the vehicle 11 on the basis of the composite image, and park the vehicle 11.

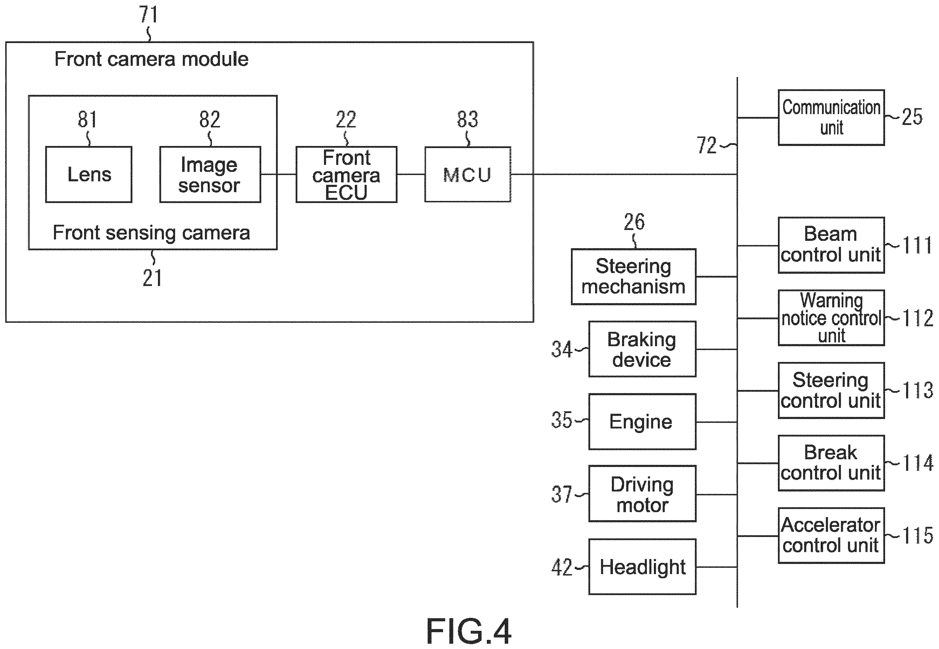

Further, the driving control ECU 51 does not necessarily need to control the plurality of different functions. For example, as shown in Fig. 4, a control unit may be provided for control content, i.e., each function. Note that the components corresponding to those in Fig. 2 are denoted by the same reference symbols in Fig. 4, and description thereof will be appropriately omitted.

In the example shown in Fig. 4, to the bus 72 for CAN communication, a plurality of units including the front camera module 71, the communication unit 25, the steering mechanism 26, the braking device 34, the engine 35, the driving motor 37, the headlight 42, a beam control unit 111, a warning notice control unit 112, a steering control unit 113, a break control unit 114, and an accelerator control unit 115.

In this example, the control performed by the driving control ECU 51 in the example shown in Fig. 2 is shared and performed by the beam control unit 111, the warning notice control unit 112, the steering control unit 113, the break control unit 114, and the accelerator control unit 115.

Specifically, for example, the beam control unit 111 performs control of switching a low beam and a high beam by controlling the headlight 42 on the basis of the result of image recognition, which is obtained by the front camera ECU 22. Further, the warning notice control unit 112 controls the warning notice such as displaying of various warnings on the display unit 24 and outputting a warning message by the speaker (not shown), on the basis of the result of image recognition, which is obtained by the front camera ECU 22.

The steering control unit 113 controls the travelling direction of the vehicle 11 by controlling the steering mechanism 26 on the basis of the result of image recognition, which is obtained by the front camera ECU 22, the measurement results from the radar 27 and the lidar 28, and the like. The break control unit 114 controls the stop and deceleration of the vehicle 11 by controlling the braking device 34 on the basis of the result of image recognition, which is obtained by the front camera ECU 22, the measurement results from the radar 27 and the lidar 28, and the like.

Further, the accelerator control unit 115 controls starting and acceleration of the vehicle 11 by controlling the engine 35 and the driving motor 37 on the basis of the result of image recognition, which is obtained by the front camera ECU 22, the measurement results from the radar 27 and the lidar 28, and the like.

### <2. First Embodiment>

### (Configuration Example of Vehicle Control Unit)

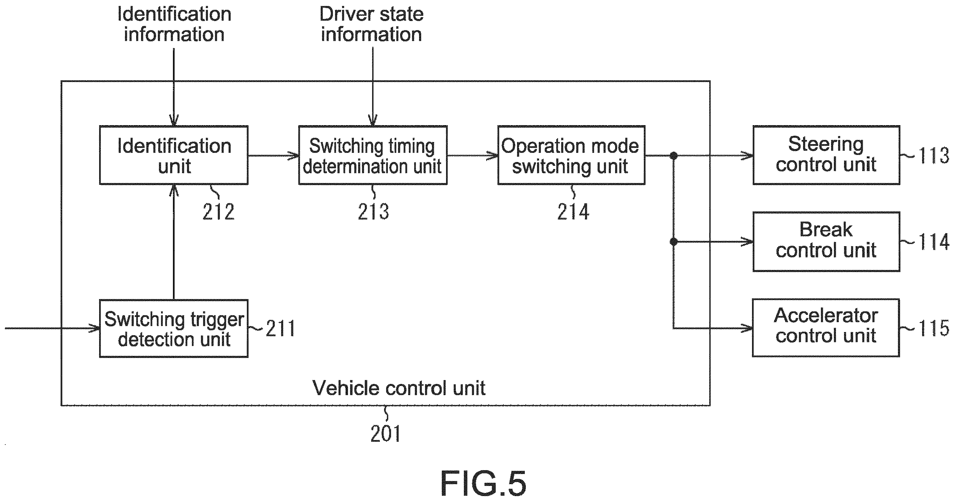

Fig. 5 shows a configuration example of a vehicle control unit according to a first embodiment of the present invention.

A vehicle control unit 201 shown in Fig. 5 is realized by, for example, the integrated ECU 31 shown in Fig. 1, particularly the driving control ECU 51, and executes driving assistant processing performed in the vehicle 11. The vehicle control unit 201 controls the steering control unit 113, the break control unit 114, and the accelerator control unit 115 to control switching of operation modes of driving mechanisms such as the steering mechanism 26 relating to steering of the vehicle 11, the braking device 34 relating to braking of the vehicle 11, and the engine 35 and driving motor 37 relating to driving (travelling) of the vehicle 11. Specifically, the vehicle control unit 201 switches the operation modes of the driving mechanism at different timings in accordance with an operation mode switching trigger of the vehicle 11.

The vehicle control unit 201 in Fig. 5 includes a switching trigger detection unit 211, an identification unit 212, a switching timing determination unit 213, and an operation mode switching unit 214.

The switching trigger detection unit 211 detects a trigger (switching trigger) for switching the operation mode of the vehicle 11 (host vehicle). When the switching trigger is detected, the switching trigger detection unit 211 supplies, to the identification unit 212, information indicating that the switching trigger is detected.

When the information is supplied from the switching trigger detection unit 211, the identification unit 212 performs individual identification of the driver on the basis of identification information for identifying the driver. The identification unit 212 supplies the result of the individual identification to the switching timing determination unit 213.

The switching timing determination unit 213 determines the switching timing of each driving mechanism (the steering mechanism 26, the braking device 34, the engine 35, or the driving motor 37).

For example, the switching timing determination unit 213 determines the switching timing of each driving mechanism in accordance with the result of the individual identification supplied from the identification unit 212. Specifically, the switching timing determination unit 213 determines the switching timing of each driving mechanism on the basis of driver state information indicating the state of the driver identified by the result of the individual identification. The switching timing determination unit 213 supplies information indicating the determined switching timing of each driving mechanism to the operation mode switching unit 214.

The operation mode switching unit 214 controls the steering control unit 113, the break control unit 114, and the accelerator control unit 115 to switch the operation mode of each driving mechanism at the switching timing indicated by the information supplied from the switching timing determination unit 213. For example, the operation mode switching unit 214 instructs each of the steering control unit 113, the break control unit 114, and the accelerator control unit 115 to switch the corresponding operation mode of the mechanism at the corresponding switching timing.

The steering control unit 113, the break control unit 114, and the accelerator control unit 115 control, in the case where the operation mode is automatic driving to be described later, each driving mechanism by generating a control signal on the basis of output of each sensor or the like. Further, the steering control unit 113, the break control unit 114, and the accelerator control unit 115 control, in the case where the operation mode is manual driving to be described later, each driving mechanism by generating a control signal on the basis of a driver's operation.

### (Regarding Operation Mode)

Now, the operation mode of the vehicle will be described.

Here, the operation mode of the vehicle is roughly divided into three modes of fully manual driving, assisted driving, and automated driving.

The fully manual driving is an operation mode in which a driver performs all the driving of a host vehicle. In the fully manual driving, the driving authority is on the human side.

The assisted driving is an operation mode in which a control system of the vehicle performs a part of the driving to assist the driving by the driver. Also in the assisted driving, the driving authority is on the human side.

The automated driving is an operation mode in which the control system of the vehicle performs all the driving of the host vehicle. In the automated driving, the driving authority is on the vehicle side.

As described above, in the assisted driving, although a part of the driving is performed by the control system of the vehicle, the driving authority is on the human side.

Here, assumption is made that an operation mode in which the driving authority is on the human side is manual driving and an operation mode in which the driving authority is on the vehicle side is automatic driving. Therefore, in the following, the fully manual driving and assisted driving are regarded as the manual driving, and the automated driving is regarded as the automatic driving.

### (Operation Mode Switching Processing)

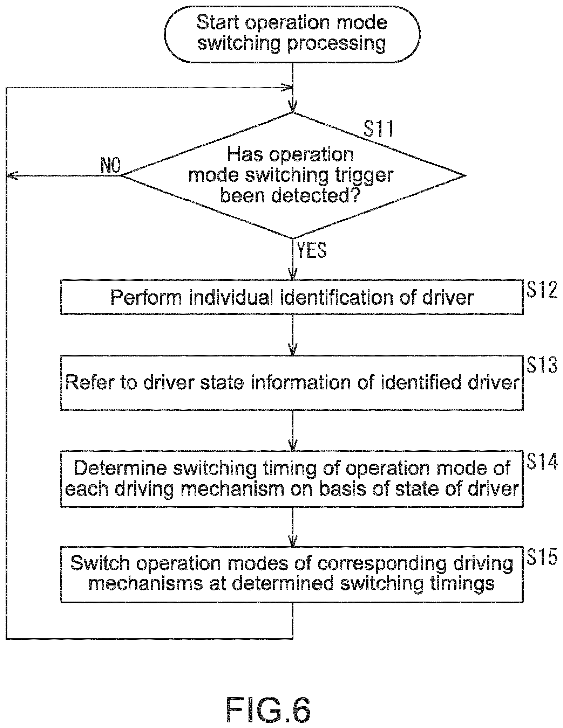

Next, operation mode switching processing by the vehicle control unit 201 will be described with reference to the flowchart of Fig. 6. Note that in this example, description will be made assuming that the vehicle 11 travels with the operation mode being the manual driving.

In Step S11, the switching trigger detection unit 211 determines whether or not an operation mode switching trigger has been detected.

Here, the switching trigger is an operation of instructing to switch the operation mode by the driver, information indicating that the vehicle 11 has approached the junction from a general road to an expressway, or the like. Further, in the case where the vehicle 11 has a function of switching the operation mode in accordance with the operation mode of a different vehicle travelling around the vehicle 11, the switching trigger may be information indicating the operation mode of the different vehicle acquired by inter-vehicle communication.

Here, since the operation mode of the vehicle 11 is the manual driving, assumption is made that the switching trigger indicates switching from the manual driving to the automatic driving.

The processing of Step S11 is repeated until it is determined that the operation mode switching trigger has been detected. Then, in the case where it is determined in Step S11 that the operation mode switching trigger has been detected, the processing proceeds to Step S12, and the identification unit 212 performs individual identification of the driver on the basis of the identification information.

Here, the identification information is a face image of the driver imaged by a camera provided in the interior of the vehicle, an ID readable from an IC chip provided in a driver's license or ID card, or the like. For example, in the case where a face image of the driver is acquired as the identification information, the identification unit 212 performs individual identification of the driver by face authentication.

After the individual identification of the driver is performed, the switching timing determination unit 213 refers to the driver state information of the identified driver in Step S13.

Here, the driver state information is a profile such as a driver history, a driving frequency, and age, a life log such as driving duration time, a health state, and sleeping time, or the like.

Then, in Step S14, the switching timing determination unit 213 determines the switching timing of each driving mechanism on the basis of the state of the driver indicated by the referred driver state information. Specifically, the switching timing determination unit 213 determines the order of switching the operation mode of each driving mechanism and the time interval of the switching.

For example, in the order of the engine 35 or driving motor 37, the braking device 34, and the steering mechanism 26, the switching timing is determined so that the operation mode of each driving mechanism is switched from the manual driving to the automatic driving. Further, in the case where, for example, the driving skill level of the driver is low or the age is high, regarding the switching of the operation mode of each driving mechanism, the switching timing is determined so that the time interval from when the switching trigger is detected to when the operation mode is actually switched is prolonged.

In Step S15, the operation mode switching unit 214 controls the steering control unit 113, the break control unit 114, and the accelerator control unit 115 to switch the operation modes of the corresponding driving mechanisms at the determined switching timings.

In accordance with the above-mentioned processing, since the switching timing of the operation mode of each driving mechanism is determined on the basis of the state of the individually identified driver, the operation mode of each driving mechanism is switched in a stepwise manner in accordance with the state of the driver, and it is possible to realize more appropriate switching of the operation mode as the whole vehicle 11.

Note that although the switching timing of the operation mode of each driving mechanism is determined on the basis of the state of the individually identified driver in the above-mentioned example, the switching timing of the operation mode of each driving mechanism may be determined for each individually identified driver in advance. Further, by providing a configuration capable of acquiring the state of the driver in real time, the switching timing of the operation mode of each driving mechanism may be determined on the basis of the acquired state of the driver without performing individual identification of the driver.

### <3. Second Embodiment>

### (Configuration Example of Vehicle Control Unit)

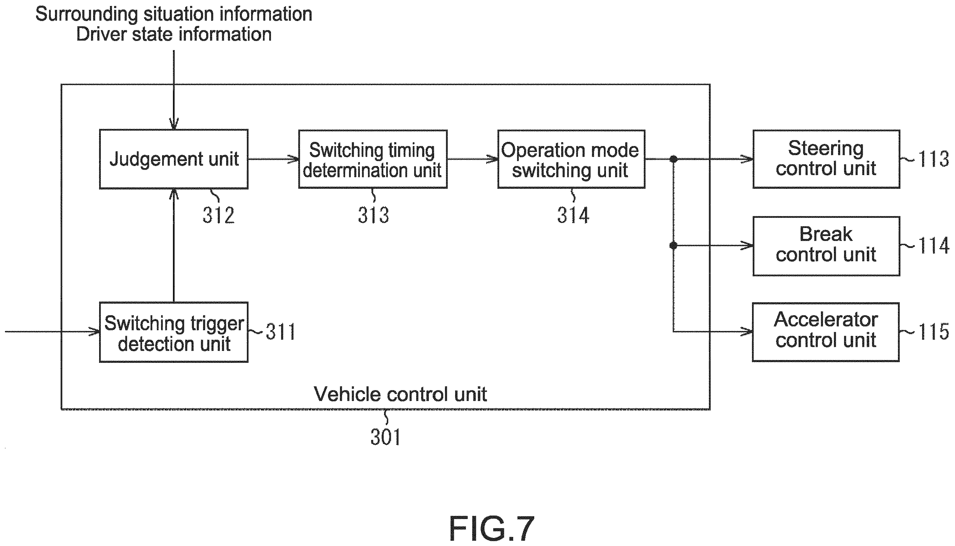

Fig. 7 shows a configuration example of a vehicle control unit according to a second embodiment of the present invention.

Also a vehicle control unit 301 in Fig. 7 is realized by the driving control ECU 51, and switches the operation modes of the driving mechanisms at different timings in accordance with the operation mode switching trigger of the vehicle 11.

The vehicle control unit 301 shown in Fig. 7 includes a switching trigger detection unit 311, a judgement unit 312, a switching timing determination unit 313, and an operation mode switching unit 314.

The switching trigger detection unit 311 detects a switching trigger, and supplies, to the judgement unit 312, information indicating that a switching trigger has been detected.

When the information is supplied from the switching trigger detection unit 311, the judgement unit 312 judges a situation around the host vehicle on the basis of surrounding situation information indicating a situation around the vehicle 11. Further, the judgement unit 312 judges the state of the driver on the basis of the driver state information indicating the state of the driver. The judgement unit 312 supplies the judgement result to the switching timing determination unit 313.

The switching timing determination unit 313 determines the switching timing of each driving mechanism (the steering mechanism 26, the braking device 34, the engine 35, or the driving motor 37) on the basis of the judgement result supplied from the judgement unit 312. Specifically, the switching timing determination unit 313 determines the switching timing of each driving mechanism on the basis of the situation around the host vehicle or the state of the driver. The switching timing determination unit 313 supplies information indicating the determined switching timing of each driving mechanism to the operation mode switching unit 314.

The operation mode switching unit 314 controls the steering control unit 113, the break control unit 114, and the accelerator control unit 115 to switch the operation mode of each driving mechanism at the switching timing indicated by the information supplied from the switching timing determination unit 313.

### (Operation Mode Switching Processing)

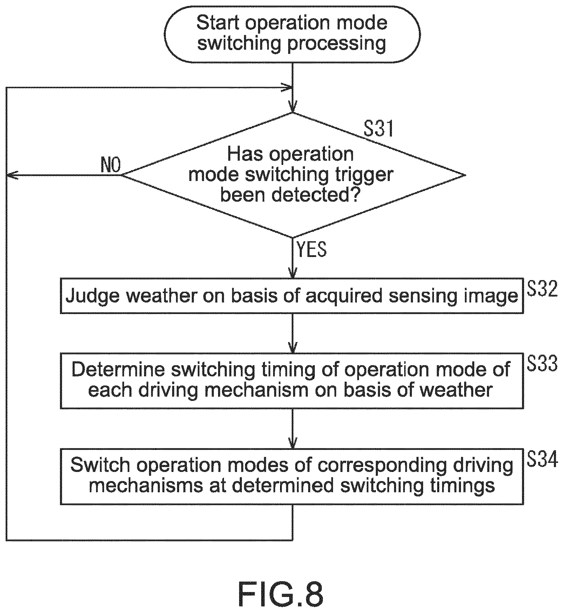

Next, operation mode switching processing by the vehicle control unit 301 will be described with reference to the flowchart of Fig. 8. Note that in this example, description will be made assuming that the vehicle 11 travels with the operation mode being the automatic driving.

In Step S31, the switching trigger detection unit 311 determines whether or not an operation mode switching trigger has been detected.

Here, since the operation mode of the vehicle 11 is the automatic driving, assumption is made that the switching trigger indicates switching from the automatic driving to the manual driving.

The processing of Step S31 is repeated until it is determined that the operation mode switching trigger has been detected. Then, in the case where it is determined in Step S31 that the operation mode switching trigger has been detected, the processing proceeds to Step S32, and the judgement unit 312 acquires a sensing image as the surrounding situation information and judges the weather on the basis of the acquired sensing image.

The sensing image is an image obtained by the front sensing camera 21 imaging the front of the vehicle 11 as a subject. The judgement unit 312 judges the weather by acquiring the sensing image via the front camera ECU 22 and analyzing the acquired sensing image.

For example, in the case where raindrops are in the sensing image or the amount of clouds in the sky exceeds a certain percentage, the judgement unit 312 determines that the weather is rainy. Further, in the case where no raindrop is in the sensing image, the sky color is blue, and the entire image is bright, the judgement unit 312 determined that the weather is sunny.

After the weather is judged, the switching timing determination unit 313 determines the switching timing of each driving mechanism on the basis of the judged weather in Step S33. Specifically, the switching timing determination unit 313 determines the order of switching the operation mode of each driving mechanism and the time interval of the switching.

For example, in the case where the weather is rainy, the visibility is bad and slipping is likely to occur due to sudden braking by erroneous judgement by the driver. In this regard, in the case where it is determined that the weather is rainy, the switching timing is determined so that the operation mode of the braking device 34 responsible for the braking operation is switched from the automatic driving to the manual driving after the operation mode of the steering mechanism 26, engine 35, or driving motor 37. Further, in the case where it is determined that the weather is sunny, the switching timing is determined so that the operation mode of the engine 35 or driving motor 37 is switched from the automatic driving to the manual driving after the operation mode of the steering mechanism 26 or braking device 34.

In Step S34, the operation mode switching unit 314 controls the steering control unit 113, the break control unit 114, and the accelerator control unit 115 to switch the operation modes of the corresponding driving mechanisms at the determined switching timings.

In accordance with the above-mentioned processing, since the switching timing of the operation mode of each driving mechanism is determined on the basis of the weather, the operation mode of each driving mechanism is switched in a stepwise manner in accordance with the weather, and it is possible to realize more appropriate switching of the operation mode as the whole vehicle 11.

### (Another Example of Operation Mode Switching Processing)

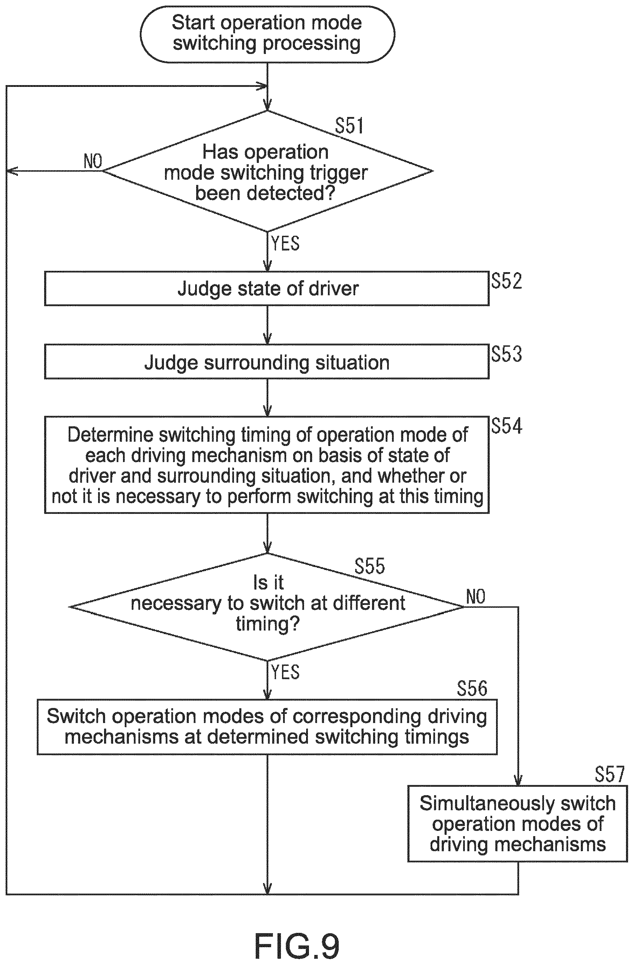

Fig. 9 is a flowchart describing another example of the operation mode switching processing by the vehicle control unit 301.

In Step S51, the switching trigger detection unit 311 determines whether or not an operation mode switching trigger has been detected.

The processing of Step S51 is repeated until it is determined that the operation mode switching trigger has been detected. Then, in the case where it is determined in Step S51 that the operation mode switching trigger has been detected, the processing proceeds to Step S52, and the judgement unit 312 judges the state of the driver on the basis of the driver state information.

Here, the driver state information is a profile such as a driver history, a driving frequency, and age, a life log such as driving duration time, a health state, and sleeping time, or the like. In this case, the judgement unit 312 judges the driving skill level and fatigue level of the driver on the basis of the profile and the life log.

Further, in the case where a DMS (Driver Monitoring System) by an in-vehicle camera is mounted on the vehicle 11, the driver state information may include the orientation of the face, closing degree of the eyes, opening degree of the mouth, or the like of the driver detected by the DMS.

After the state of the driver is judged, the processing proceeds to Step S53, and the judgement unit 312 judges the situation around the host vehicle on the basis of the surrounding situation information.

Here, the surrounding situation information is the front image, the rear image, the left side image, or the right side image obtained by the front view camera 32, the rear view camera 39, or the side view camera 29, the composite image obtained by the image composite ECU 101, or the like. In this case, the judgement unit 312 judges the number of different vehicles that travel around the host vehicle (vehicle 11), on the basis of each image.

Note that the judgement unit 312 may judge the number of different vehicles that travel around the host vehicle (vehicle 11), on the basis of the peripheral vehicle information received through inter-vehicle communication by the communication unit 25.

After the situation around the host vehicle is judged, in Step S54, the switching timing determination unit 313 determines the switching timing of the operation mode of each driving mechanism on the basis of the judged state of the driver and situation around the host vehicle. Specifically, the switching timing determination unit 313 determines the order of switching the operation mode of each driving mechanism and the time interval of the switching. Further, the switching timing determination unit 313 determines whether or not it is necessary to switch the operation mode of each driving mechanism at the determined switching timing.

Then, in Step S55, whether or not it is necessary to switch the operation mode of each driving mechanism at the determined switching timing is determined.

In the case where it is determined that it is necessary to switch the operation mode at the determined switching timing, the processing proceeds to Step S56, and the operation mode switching unit 314 controls the steering control unit 113, the break control unit 114, and the accelerator control unit 115 to switch the operation modes of the corresponding driving mechanisms at the determined switching timings.

Meanwhile, in the case where it is determined that it is not necessary to switch the operation mode at the determined switching timing, the processing proceeds to Step S57, and the operation mode switching unit 314 controls the steering control unit 113, the break control unit 114, and the accelerator control unit 115 to simultaneously switch the operation modes of the driving mechanisms at a predetermined timing.

In accordance with the above-mentioned processing, since the switching timing of the operation mode of each driving mechanism and whether or not it is necessary to perform switching at the switching timing are determined on the basis of the state of the driver and the surrounding situation, the operation mode of each driving mechanism is switched as necessary in a stepwise manner in accordance with the state of the driver and the surrounding situation, and it is possible to realize more appropriate switching of the operation mode as the whole vehicle 11.

### <4. Third Embodiment>

### (Configuration Example of Vehicle Control Unit)

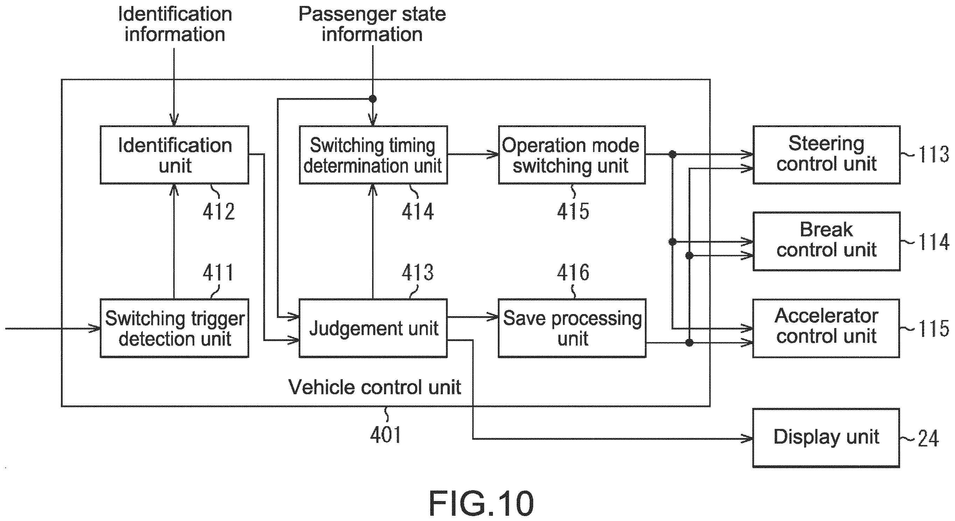

Fig. 10 shows a configuration example of a vehicle control unit according to a third embodiment of the present invention.

Also a vehicle control unit 401 in Fig. 10 is realized by the driving control ECU 51, and switches operation modes of driving mechanisms at different timings in accordance with an operation mode switching trigger of the vehicle 11.

The vehicle control unit 401 in Fig. 10 includes a switching trigger detection unit 411, an identification unit 412, a judgement unit 413, a switching timing determination unit 414, an operation mode switching unit 415, and a save processing unit 416.

The switching trigger detection unit 411 detects a switching trigger, and supplies, to the identification unit 412, information indicating that the switching trigger has been detected.

When the information is supplied from the switching trigger detection unit 411, the identification unit 412 performs individual identification of a plurality of passengers (all passengers) on the basis of the identification information for identifying a passenger. The identification unit 412 supplies the results of the individual identification to the judgement unit 413.

When the information is supplied from the identification unit 412, the judgement unit 413 judges the presence or absence of a passenger who can be a driver (hereinafter, referred to as the driver candidate), on the basis of passenger state information indicating the state of the passenger. The judgement unit 413 supplies the information corresponding to the judgement result to the switching timing determination unit 414 or the save processing unit 416. Further, the judgement unit 413 controls display of the display unit 24 in accordance with the judgement result.

The switching timing determination unit 414 determines the switching timing of each driving mechanism (the steering mechanism 26, the braking device 34, the engine 35, or the driving motor 37) on the basis of the information supplied from the judgement unit 413. Specifically, the switching timing determination unit 414 determines the switching timing of each driving mechanism on the basis of the passenger state information indicating the state of the driver candidate. The switching timing determination unit 414 supplies the information indicating the determined switching timing of each driving mechanism to the operation mode switching unit 415.

The operation mode switching unit 415 controls the steering control unit 113, the break control unit 114, and the accelerator control unit 115 to switch the operation mode of each driving mechanism at the switching timing indicated by the information supplied from the switching timing determination unit 414.

The save processing unit 416 controls the steering control unit 113, the break control unit 114, and the accelerator control unit 115 on the basis of the information supplied from the judgement unit 413 to perform save processing for bringing the travelling vehicle 11 into a safe state.

### (Operation Mode Switching Processing)

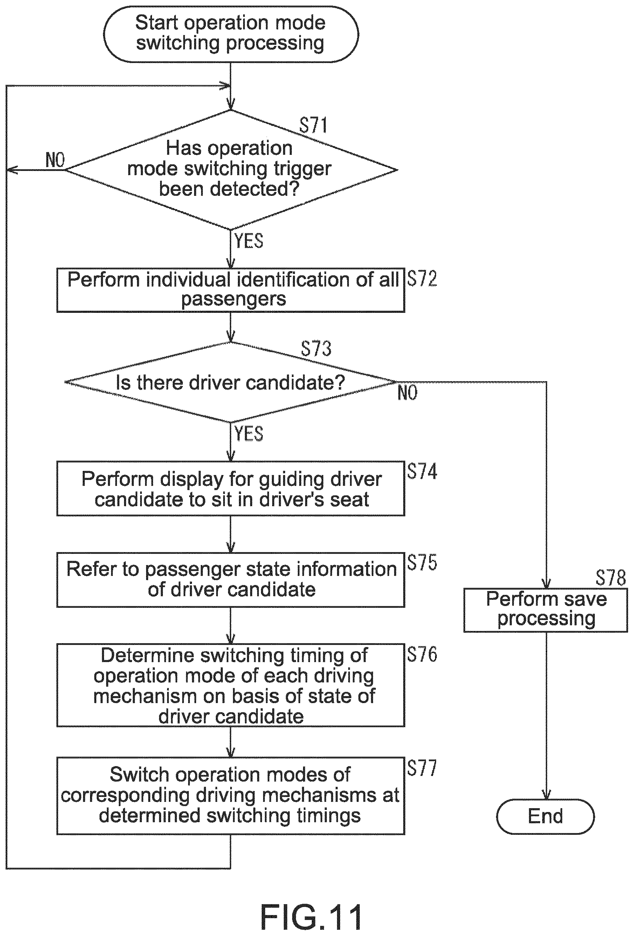

Next, the operation mode switching processing by the vehicle control unit 401 will be described with reference to the flowchart of Fig. 11. Note that in this example, description will be made assuming that the vehicle 11 travels with the operation mode being the automatic driving.

In Step S71, the switching trigger detection unit 411 determines whether or not an operation mode switching trigger has been detected.

Note that here, since the operation mode of the vehicle 11 is the automatic driving, the switching trigger indicates witching from the automatic driving to the manual driving.

The processing of Step S71 is repeated until it is determined that the operation mode switching trigger has been detected. Then, in the case where it is determined in Step S71 that the operation mode switching trigger has been detected, the processing proceeds to Step S72, and the identification unit 412 performs individual identification of all passengers on the basis of the identification information.

Here, the identification information is a face image of a passenger captured by a camera provided in the interior of the vehicle, and the identification unit 412 performs individual identification of all passengers by face recognition.

After the individual identification of all the passengers is performed, in Step S73, the judgement unit 413 determines, on the basis of the passenger state information of all the identified passengers, whether or not there is a driver candidate in the passengers.

Here, the passenger state information is a profile such as the presence or absence of a driver's license, a driver history, a driving frequency, and age, a life log such as driving duration time, a health state, and sleeping time, or the like. In this case, the judgement unit 312 judges the presence or absence of the driver candidate on the basis of the profile and the life log.

In the case where it is determined in Step S73 that there is a driver candidate in the passengers, the processing proceeds to Step S74.

Note that in the case where there are a plurality of driver candidates, the judgement unit 413 determines one of them as the final driver candidate. For example, the judgement unit 413 causes the plurality of driver candidates to select who is the final driver candidate, by display on the display unit 24. At this time, on the basis of the profile and the life log, the ranking of suitable driver candidates is presented to the passengers. For example, a driver candidate with low sleeping time on the previous day ranks low.

In Step S74, the judgement unit 413 causes the display unit 24 to perform display for guiding the driver candidate to sit in the driver's seat.

Next, in Step S75, the switching timing determination unit 414 refers to the passenger state information (profile or life log) of the driver candidate.

Then, in Step S76, the switching timing determination unit 414 determines the switching timing of each driving mechanism on the basis of the state of the driver candidate indicated by the referred passenger state information. Specifically, the switching timing determination unit 414 determines the order of switching the operation mode of each driving mechanism and the time interval of the switching.

In Step S77, the operation mode switching unit 415 controls the steering control unit 113, the break control unit 114, and the accelerator control unit 115 to switch the operation mode of each driving mechanism at the determined switching timing.

Meanwhile, in the case where it is determined in Step S73 that there is no driver candidate in the passenger, the processing proceeds to Step S78.

In Step S78, the save processing unit 416 controls the steering control unit 113, the break control unit 114, and the accelerator control unit 115 to performs the save processing for bringing the travelling vehicle 11 into a safe state.

For example, in the case where none of the passengers has a driver's license or the health state of a passenger who has a driver's license is too low to bear the driving, it is determined that there is no driver candidate in the passengers.

At this time, the save processing unit 416 controls the steering control unit 113, the break control unit 114, and the accelerator control unit 115 to cause the travelling vehicle 11 to stop at a safe place such as a shoulder, as the save processing.

Further, by performing as the save processing, travelling by ACC (Adaptive Cruise Control) or inter-vehicle communication with another vehicle travelling around the host vehicle, travelling by CACC (Cooperative ACC) may be performed. In the travelling by CACC, for example, it travels following another vehicle toward the same destination as that of the host vehicle or a place close thereto.

Further, after the vehicle 11 is stopped by the save processing, a trailer such as a wrecker car may be called by wireless communication of the communication unit 25.

In accordance with the above-mentioned processing, since in the case where there is a driver candidate who can be a driver in the passengers, the switching timing of the operation mode of each driving mechanism is determined on the basis of the state of the driver candidate, the operation mode of each driving mechanism is switched in a stepwise manner in accordance with the state of the driver candidate, and it is possible to realize more appropriate switching of the operation mode as the whole vehicle 11.

Further, since in the case where there is no driver candidate who can be a driver in the passengers, the save processing is performed, it is possible to secure the safety of the vehicle 11 even in the case where the driver is suddenly taken ill during the automatic driving.

### Reference Signs List

- 11: vehicle
- 24: display unit
- 25: communication unit
- 26: steering mechanism
- 34: braking device
- 35: engine
- 37: driving motor
- 51: driving control ECU
- 113: steering control unit
- 114: break control unit
- 115: accelerator control unit
- 201: vehicle control unit
- 212: identification unit
- 213: switching timing determination unit
- 214: operation mode switching unit
- 301: vehicle control unit
- 312: judgement unit
- 313: switching timing determination unit
- 314: operation mode switching unit
- 401: vehicle control unit
- 412: identification unit
- 413: judgement unit
- 414: switching timing determination unit
- 415: operation mode switching unit
- 416: save processing unit

## Claims

1. A vehicle control apparatus (201), comprising:
a control unit (214) configured for switching operation modes of a plurality of driving mechanisms at different timings in accordance with an operation mode switching trigger of a vehicle (11),and
a determination unit (213) configured for determining, in accordance with the switching trigger for switching the operation mode of the vehicle (11) from a first mode to a second mode, switching timings of switching the operation modes of the plurality of driving mechanisms from the first mode to the second mode **characterized in that** the vehicle control apparatus (201) comprises
an identification unit (212) configured for performing individual identification of a driver,
the determination unit determining the switching timings of the operation modes of the plurality of driving mechanisms in accordance with a result of the individual identification of the driver.

2. The vehicle control apparatus (201) according to claim 1, wherein
the determination unit (213) is configured for determining the switching timings of the operation modes of the plurality of driving mechanisms on a basis of at least one of a profile or a life log of the driver on which the individual identification is performed.

3. The vehicle control apparatus (201) according to claim 1, further comprising
a judgement unit (312) configured for judging a situation around the vehicle (11),
the determination unit (213) determining the switching timings of the operation modes of the plurality of driving mechanisms on a basis of the judged situation around the vehicle.

4. The vehicle control apparatus (201) according to claim 3, wherein
the situation around the vehicle includes weather.

5. The vehicle control apparatus (201) according to claim 3, wherein
the judgement unit is further configured for judging a state of a driver, and
the determination unit is configured for determining, on a basis of the judged situation around the vehicle and the judged state of the driver, whether or not it is necessary to switch the operation modes of the plurality of driving mechanisms at the switching timings.

6. The vehicle control apparatus (201) according to claim 1, wherein
the identification unit (212) is configured for performing individual identification of a plurality of passengers; and
the judgement unit (312) is configured for judging, on a basis of a result of the individual identification of the plurality of passengers, presence or absence of a passenger who can be the driver, wherein
the determination unit is configured for determining the switching timings of the operation modes of the plurality of driving mechanism in accordance with a judgement result of the presence or absence of the passenger who can be the driver.

7. The vehicle control apparatus (201) according to claim 6, wherein
the determination unit is configured for determining, where it is determined that there is a passenger who can be the driver, the switching timings of the operation modes of the plurality of driving mechanisms on a basis of at least one of a profile or a life log of the passenger who can be the driver.

8. The vehicle control apparatus (201) according to claim 1, wherein
the determination unit is configured for determining at least one of order or intervals of switching the operation modes of the plurality of driving mechanisms.

9. The vehicle control apparatus (201) according to claim 1, further comprising
a switching unit (213) configured for switching the operation modes of the plurality of driving mechanisms at the determined switching timings.

10. A vehicle control method, comprising the step of:
switching (S15) operation modes of a plurality of driving mechanisms at different timings in accordance with an operation mode switching trigger of a vehicle, and
determining (S14), in accordance with the switching trigger for switching the operation mode of the vehicle from a first mode to a second mode, switching timings of switching the operation modes of the plurality of driving mechanisms from the first mode to the second mode,
**characterized in that** the method comprises
performing individual identification (S12) of a driver, and
determining the switching timings (S14) of the operation modes of the plurality of driving mechanisms in accordance with a result of the individual identification of the driver.

11. A movable object, comprising a vehicle control apparatus (201) according to claim 1.

## Patentansprüche

1. Fahrzeugsteuervorrichtung (201), die Folgendes umfasst:
eine Steuereinheit (214), die konfiguriert ist zum Umschalten von Betriebsarten mehrerer Ansteuermechanismen zu verschiedenen Zeitpunkten in Übereinstimmung mit einem Betriebsartumschaltauslöser eines Fahrzeugs (11), und
eine Bestimmungseinheit (213), die konfiguriert ist zum Bestimmen in Übereinstimmung mit dem Umschaltauslöser zum Umschalten der Betriebsart des Fahrzeugs (11) von einer ersten Betriebsart zu einer zweiten Betriebsart von Umschaltzeitpunkten des Umschaltens der Betriebsarten der mehreren Ansteuermechanismen von der ersten Betriebsart zu der zweiten Betriebsart, wobei die Fahrzeugsteuervorrichtung (201) **gekennzeichnet ist durch**:
eine Identifizierungseinheit (212), die konfiguriert ist zum Durchführen einer individuellen Identifizierung eines Fahrers, wobei
die Bestimmungseinheit die Umschaltzeitpunkte der Betriebsarten der mehreren Ansteuermechanismen in Übereinstimmung mit einem Ergebnis der individuellen Identifizierung des Fahrers bestimmt.

2. Fahrzeugsteuervorrichtung (201) nach Anspruch 1, wobei
die Bestimmungseinheit (213) konfiguriert ist zum Bestimmen der Umschaltzeitpunkte der Betriebsarten der mehreren Ansteuermechanismen auf der Grundlage eines Profils und/oder eines Lebensprotokolls des Fahrers, an dem die individuelle Identifizierung durchgeführt wird.

3. Fahrzeugsteuervorrichtung (201) nach Anspruch 1, die ferner Folgendes umfasst:
eine Beurteilungseinheit (312), die konfiguriert ist zum Beurteilen einer Situation um das Fahrzeug (11), wobei
die Bestimmungseinheit (213) die Umschaltzeitpunkte der Betriebsarten der mehreren Ansteuermechanismen auf der Grundlage der beurteilten Situation um das Fahrzeug bestimmt.

4. Fahrzeugsteuervorrichtung (201) nach Anspruch 3, wobei
die Situation um das Fahrzeug das Wetter enthält.

5. Fahrzeugsteuervorrichtung (201) nach Anspruch 3, wobei
die Beurteilungseinheit ferner konfiguriert ist zum Beurteilen eines Zustands eines Fahrers und
die Bestimmungseinheit konfiguriert ist zum Bestimmen auf der Grundlage der beurteilten Situation um das Fahrzeug und des beurteilten Zustands des Fahrers, ob es nötig ist, die Betriebsarten der mehreren Ansteuermechanismen zu den Umschaltzeitpunkten umzuschalten oder nicht.

6. Fahrzeugsteuervorrichtung (201) nach Anspruch 1, wobei
die Identifizierungseinheit (212) konfiguriert ist zum Durchführen einer individuellen Identifizierung mehrerer Passagiere und
die Beurteilungseinheit (312) konfiguriert ist zum Beurteilen auf der Grundlage eines Ergebnisses der individuellen Identifizierung der mehreren Passagiere der Anwesenheit oder der Abwesenheit eines Passagiers, der der Fahrer sein kann, wobei
die Bestimmungseinheit konfiguriert ist zum Bestimmen der Umschaltzeitpunkte der Betriebsarten der mehreren Ansteuermechanismen in Übereinstimmung mit einem Beurteilungsergebnis der Anwesenheit oder der Abwesenheit des Passagiers, der der Fahrer sein kann.

7. Fahrzeugsteuervorrichtung (201) nach Anspruch 6, wobei
die Bestimmungseinheit konfiguriert ist zum Bestimmen, falls bestimmt wird, dass ein Passagier anwesend ist, der der Fahrer sein kann, der Umschaltzeitpunkte der Betriebsarten der mehreren Ansteuermechanismen auf der Grundlage eines Profils und/oder eines Lebensprotokolls des Passagiers, der der Fahrer sein kann.

8. Fahrzeugsteuervorrichtung (201) nach Anspruch 1, wobei
die Bestimmungseinheit konfiguriert ist zum Bestimmen einer Reihenfolge und/oder von Intervallen des Umschaltens der Betriebsarten der mehreren Ansteuermechanismen.

9. Fahrzeugsteuervorrichtung (201) nach Anspruch 1, die ferner Folgendes umfasst:
eine Schalteinheit (213), die konfiguriert ist zum Umschalten der Betriebsarten der mehreren Ansteuermechanismen zu den bestimmten Umschaltzeitpunkten.

10. Fahrzeugsteuerverfahren, das den folgenden Schritt umfasst:
Umschalten (S15) von Betriebsarten mehrerer Ansteuermechanismen zu verschiedenen Zeitpunkten in Übereinstimmung mit einem Betriebsartumschaltauslöser eines Fahrzeugs und
Bestimmen (S14) in Übereinstimmung mit dem Umschaltauslöser zum Umschalten der Betriebsart des Fahrzeugs von einer ersten Betriebsart zu einer zweiten Betriebsart von Umschaltzeitpunkten des Umschaltens der Betriebsarten der mehreren Ansteuermechanismen von der ersten Betriebsart zu der zweiten Betriebsart, wobei
das Verfahren **gekennzeichnet ist durch**:
Durchführen einer individuellen Identifizierung (S12) eines Fahrers und
Bestimmen der Umschaltzeitpunkte (S14) der Betriebsarten der mehreren Ansteuermechanismen in Übereinstimmung mit einem Ergebnis der individuellen Identifizierung des Fahrers.

11. Bewegliches Objekt, das eine Fahrzeugsteuervorrichtung (201) nach Anspruch 1 umfasst.

## Revendications

1. Appareil de commande de véhicule (201) comprenant :
une unité de commande (214) configurée pour commuter des modes de fonctionnement d'une pluralité de mécanismes de conduite à différents moments conformément à un déclencheur de commutation de mode de fonctionnement d'un véhicule (11), et
une unité de détermination (213) configurée pour déterminer, conformément au déclencheur de commutation pour commuter le mode de fonctionnement du véhicule (11) d'un premier mode à un second mode, de moments de commutation de la commutation des modes de fonctionnement de la pluralité de mécanismes de conduite du premier mode au second mode **caractérisé en ce que** l'appareil de commande de véhicule (201) comprend
une unité d'identification (212) configurée pour réaliser une identification individuelle d'un conducteur,
l'unité de détermination déterminant les moments de commutation des modes de fonctionnement de la pluralité de mécanismes de conduite conformément à un résultat de l'identification individuelle du conducteur.

2. Appareil de commande de véhicule (201) selon la revendication 1, dans lequel
l'unité de détermination (213) est configurée pour déterminer les moments de commutation des modes de fonctionnement de la pluralité de mécanismes de conduite en fonction au moins d'un profil et/ou d'un carnet de vie du conducteur sur lequel l'identification individuelle est réalisée.

3. Appareil de commande de véhicule (201) selon la revendication 1, comprenant en outre
une unité de jugement (312) configurée pour juger une situation autour du véhicule (11),
l'unité de détermination (213) déterminant les moments de commutation des modes de fonctionnement de la pluralité de mécanismes de conduite en fonction de la situation jugée autour du véhicule.

4. Appareil de commande de véhicule (201) selon la revendication 3, dans lequel
la situation autour du véhicule comporte les conditions météorologiques.

5. Appareil de commande du véhicule (201) selon la revendication 3, dans lequel
l'unité de jugement est en outre configurée pour juger un état d'un conducteur, et
l'unité de détermination est configurée pour déterminer, en fonction de la situation jugée autour du véhicule et de l'état jugé du conducteur, qu'il convient ou non de changer les modes de fonctionnement de la pluralité de mécanismes de conduite aux moments de commutation.

6. Appareil de commande de véhicule (201) selon la revendication 1, dans lequel
l'unité d'identification (212) est configurée pour réaliser une identification individuelle d'une pluralité de passagers ; et
l'unité de jugement (312) est configurée pour juger, en fonction d'un résultat de l'identification individuelle de la pluralité de passagers, la présence ou l'absence d'un passager pouvant être le conducteur, dans lequel
l'unité de détermination est configurée pour déterminer les moments de commutation des modes de fonctionnement de la pluralité de mécanismes de conduite conformément à un résultat de jugement de la présence ou de l'absence du passager pouvant être le conducteur.

7. Appareil de commande de véhicule (201) selon la revendication 6, dans lequel
l'unité de détermination est configurée pour déterminer, lorsqu'il est déterminé qu'un passager pouvant être le conducteur existe, les moments de commutation des modes de fonctionnement de la pluralité de mécanismes de conduite en fonction au moins d'un profil et/ou d'un carnet de vie du passager pouvant être le conducteur.

8. Appareil de commande de véhicule (201) selon la revendication 1, dans lequel
l'unité de détermination est configurée pour déterminer au moins un ordre et/ou des intervalles de commutation des modes de fonctionnement de la pluralité de mécanismes de conduite.

9. Appareil de commande du véhicule (201) selon la revendication 1, comprenant en outre
une unité de commutation (213) configurée pour commuter les modes de fonctionnement de la pluralité de mécanismes de conduite aux moments de commutation déterminés.

10. Procédé de commande de véhicule, comprenant l'étape de :
commutation (S15) de modes de commutation d'une pluralité de mécanismes de conduite à différents moments conformément à un déclencheur de commutation de mode de fonctionnement d'un véhicule, et
détermination (S14), conformément au déclencheur de commutation pour commuter le mode de fonctionnement du véhicule d'un premier mode à un second mode, de moments de commutation de la commutation des modes de fonctionnement de la pluralité de mécanismes de conduite du premier mode au second mode,
**caractérisé en ce que** le procédé comprend
la réalisation d'une identification individuelle (S12) d'un conducteur, et
la détermination des moments de commutation (S14) des modes de fonctionnement de la pluralité de mécanismes de conduite conformément à un résultat de l'identification individuelle du conducteur.

11. Objet mobile comprenant un appareil de commande de véhicule (201) selon la revendication 1.
